Europäisches Patentamt

(19) European Patent Office

Office européen des brevets

(11) Publication number: **0 070 644**
A1

(12) **EUROPEAN PATENT APPLICATION**

(21) Application number: **82303529.0**

(22) Date of filing: **06.07.82**

(51) Int. Cl.³: **B 29 H 7/14**

(30) Priority: **08.07.81 GB 8121123**

(43) Date of publication of application: **26.01.83**
**Bulletin 83/4**

(84) Designated Contracting States: **DE FR IT NL SE**

(71) Applicant: **DUNLOP LIMITED, Dunlop House Ryder
Street St. James's, London SW1Y 6PX (GB)**

(72) Inventor: **Garside, John Duncan, 27 Langton Court,
Ponteland Northumberland (GB)**
Inventor: **Wingfield, James Maurice, Shiralee Holywell
Lane, Whickham Newcastle upon Tyne (GB)**
Inventor: **Ingham, Kenneth, 11 Saltpanwell Steps Off
Church Road, Whitby North Yorks (GB)**

(74) Representative: **Waller, Roy Ernest Sykes et al, Group
Patent Department Dunlop Limited 2 Parade, Sutton
Coldfield West Midlands B72 1PF (GB)**

⑸④ Methods of hose manufacture, and hose thus produced.

㊼ A method of continuous hose manufacture in which
hose comprising a liner 2, reinforcement 5 and cover 7
is cured by passage through a generally horizontal
straight curing tube 8 containing a curing medium at a
pressure and temperature sufficient to cure the hose.
The curing medium acts directly on the outer surface of
the hose and has a specific gravity substantially equal
to that of the hose assembly passing through the tube 8
so that the latter is essentially supported by its buoy-
ancy in the curing medium. The method enables hose
to be produced in which curing is effected with the
hose in a substantially straight configuration and sub-
ject to small, e.g. of the order of 10-100 Kg, haul-off
tensions so that displacement of the reinforcement
structure from its optimum configuration is minimised.

# IMPROVEMENTS IN OR RELATING TO METHODS OF HOSE MANUFACTURE

This invention concerns improvements in or relating to methods of hose manufacture and in particular to a method suitable for the continuous manufacture of long length reinforced hose which avoids the use of a temporary external covering for the uncured hose assembly during vulcanisation.

A method of continuously vulcanising long length reinforced hose is known from U K Patent 1 342 243 in which the uncured hose assembly leaving a cover extruder is passed directly through a vulcaniser attached to the extruder outlet. The vulcaniser comprises an elongate catenary tube containing steam in which the uncured hose assembly is suspended as a catenary within the tube and the haul-off tension is controlled to prevent direct contact between the outer surface of the uncured hose assembly and the inner wall of the vulcaniser tube. The risk of substantial damage to the hose surface from contact with the inner wall of the vulcaniser tube is thereby avoided.

A disadvantage of this method is that the vulcanising temperature is dependent on the steam pressure and vice versa, e.g. a steam pressure of 60 p.s.i. gives a temperature of $153^{\circ}C$ and a steam pressure of 200 p.s.i. gives a temperature of $200^{\circ}C$. For most applications a given steam pressure and temperature will not correspond to the required consolidation pressure and vulcanising temperature and hence there is a risk either of under-curing or overcuring the elastomeric material of the hose if the steam pressure is adjusted to the required level for effective consolidation, or of insufficient consolidation or excessive deformation of the elastomeric material of the hose if the steam temperature is adjusted to the required level for vulcanisation leading to local areas of weakness in the hose structure which may cause premature failure of the hose in service.

A further disadvantage of the method is that the reinforcement structure is displaced from its optimum
configuration with the result that the performance of
the hose in service is unfavourably affected.  Several
factors contribute to the displacement of the reinforcement structure including the vulcanisation of the
uncured assembly as a catenary which imparts a non-
rectilinear set to the finished hose, the high haul-off
tensions, e.g. 500-1000 Kg  necessary to maintain a 9.5mm I.D.
uncured assembly as a catenary, which causes the reinforcement structure to move relative to the uncured
liner and cover and finally variations in the curing
rate of the liner and cover materials which can result
in the cover being substantially completely cured and
locked to the reinforcement structure with the liner only
partially cured allowing the latter to move relative to
the reinforcement structure and cover due to expansion
of the mandrel.

Yet another disadvantage of the method is the
high installation costs due to the hose being suspended
as a catenary whereby the inlet to the vulcaniser tube
is considerably higher than the outlet, e.g. of the order
of 40-60 feet, and a building of similar height is
therefore required to house the apparatus.

The invention as claimed is intended to remedy
these drawbacks.  It solves the problem of how to
manufacture reinforced hose continuously in long lengths
in which displacement of the reinforcement structure from
its optimum configuration is minimised by using as the
curing medium a heating fluid having a specific gravity
at the curing temperature substantially equal to the
specific gravity of the hose assembly.

The main advantage offered by the invention is that
the hose assembly is essentially supported by its own
buoyancy in the heating fluid and maintains a substantially
straight configuration without recourse to the high haul-
off tensions required to maintain the assembly in the
catenary configuration used in the prior art method.  As
a result displacement of the reinforcement structure from its optimum configuration due to the use of high haul-off tensions and curing of the hose in a curved configuration so as to impart a non-rectilinear set is minimised.

More particularly haul-off tensions typically of the order of 10-100 Kg have been found satisfactory when using the method according to the present invention for hose sizes up to 25 mm internal diameter.

Furthermore by arranging for the hose assembly to be mainly supported by its own buoyancy in the heating fluid the magnitude of frictional contact forces between the inner surface of the curing tube and the outer surface of the hose assembly as it passes through the tube is minimised thereby reducing marking of the uncured outer surface of the hose through such contact to an acceptable level.

Preferably the heating fluid used is of a type the temperature of which can be varied independently of its pressure and vice versa whereby the curing conditions may be varied to suit all hose constructions and produce a balanced product having better physical characteristics in the polymers and better consolidation of the hose components.

The straight curing tube may extend truly horizontally, but preferably is inclinded at a small angle, e.g. $\frac{1}{2}^{O}$ to $2^{O}$, in a downwards direction from the extruder. In consequence the heating fluid can be maintained clear of the extruder to reduce sealing problems at that end of the curing tube whilst the angle of inclination is not so great as to require other than a standard height building to house the equipment.

The hose  produced using the method according to the present invention consists of a liner, reinforcement structure and cover of which a part-formed assembly comprising the liner and reinforcement structure is continuously fed to an extruder for application of the cover from where the covered assembly is continuously fed through the curing tube.

Preferably the liner and cover are both cured by passage through the curing tube and the hose assembly is internally supported on a long length flexible mandrel the expansion of which is utilised to consolidate the hose components against the external pressure of the curing medium acting on the outer surface of the hose. Subsequent contraction of the mandrel facilitates removal of the latter without the use of lubricants applied to the outer surface of the mandrel.

Preferably the compositions of the liner and cover materials are such that large variations in the degree of cure of the liner and cover during passage through the curing medium are avoided. More particularly the liner compound has a faster cure rate than that of the cover compound, e.g. approximately 25% faster at room temperature and atmospheric pressure, so that, allowing for transfer of heat in a direction through the cover to the liner, curing of the liner material occurs substantially simultaneously with that of the cover material. As a result distortion of the reinforcement structure from its optimum configuration due to curing and locking of the cover to the reinforcement structure before the liner is minimised. Furthermore expansion of the mandrel which in turn forces the liner into the interstices of the reinforcement structure is controlled so that excessive deformation of the liner material causing distortion of the reinforcement structure from its optimum configuration, local thinning of the liner material and the occurrence of surface irregularities in the finished hose is minimised.

Suitable liner and cover materials include polychloroprene, nitrile, or butyl rubbers or combinations thereof, or other polymeric material(s) capable of curing at the temperatures and pressure within the operating range of the apparatus used. The liner and cover materials may include any of the conventional additives such as plasticisers, fillers, age resistors, antioxidants, antiozants etc. known to those skilled in the art as required.

The reinforcement structure may comprise one or more layers of knitted, woven or braided textile (e.g. nylon or aromatic polyamide) or non-textile (e.g. wire) material. Alternatively the reinforcement structure may comprise one or more layers of helically wound .strip or spiral winding of textile or non-textile material. Where the reinforcement structure comprises more than one layer of material, successive layers may be separated by insulation to prevent chafing between the layers due to flexing of the hose resulting in rapid wear of the reinforcement leading to failure of the hose in service.

Preferably the mandrel is formed of polymeric material, e.g. nylon. Conveniently the mandrel incorporates means by which several mandrels may be connected for passage to the cover extruder.

Preferably the heating fluid is a liquid at the curing temperature, for example a molten salt, such as a eutectic mixture of sodium and potassium nitrates, which is stable at the curing temperature, and is circulated through the curing tube by any suitable means.

The liquid may fill the curing tube but more preferably is restricted to a central region thereof by means of a pressurised gas supplied to either end of the curing tube.

The hose will usually have an outer surface which in transverse cross-section is circular but it will be appreciated other shapes may be produced e.g. hexagonal, for particular applications where an outer surface of non-circular transverse cross section may be desirable and the method according to the present invention has been found to produce such hose having high definition of the profile imparted to the outer surface.

Furthermore while the invention is particularly suited to the manufacture of hose in which the liner and cover comprise curable polymeric materials which are cured simultaneously by passage through the curing medium it will be appreciated the liner may be cured prior to application of the cover and may be formed from a material which is substantially self-supporting e.g. polyester or polycarbonate.

The invention also provides hose manufactured by a method in accordance with the present invention.

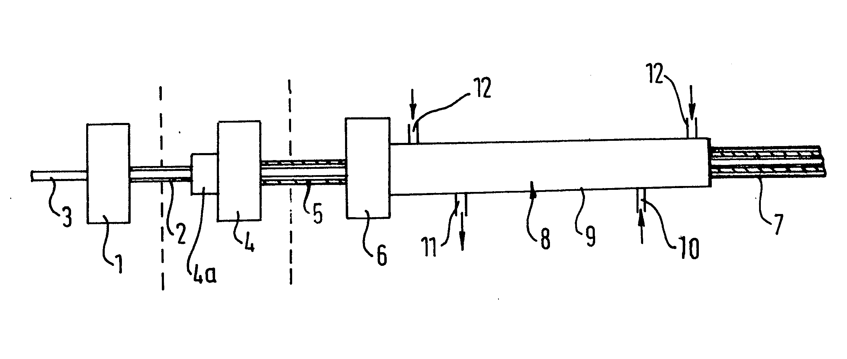

The invention will now be described in more detail , by way of example only, with reference to the accompanying drawing in which the single Figure shows apparatus for carrying out the method according to the present invention.

The apparatus shown in the accompanying drawing comprises an extruder 1 for applying a hose liner 2 to a long length flexible mandrel 3, a braider 4 for applying a braided reinforcement structure 5 to the liner which has been temporarily solidified by passage through a freeze box 4a, an extruder 6 for applying a hose cover 7 to the reinforcement structure and a vulcaniser 8 for vulcanising the covered hose assembly leaving the extruder 6.

The vulcaniser 8 comprises a straight curing tube 9 attached to the outlet from the cover extruder 6 and extending downwards at an angle of $0.8^{\circ}$ to the horizontal. The tube 9, of a suitable length to result in cure of the hose assembly passing therethrough, has an inlet 10 and an outlet 11 for circulating a heating fluid such as a molten salt mixture of sodium and potassium nitrates through the centre section of the tube and a respective inlet 12 at each end for the supply of a pressurised gas to restrict the heating fluid to the centre section and also to pressurise the heating fluid.

In use of the apparatus a part formed hose assembly consisting of the liner 2 and reinforcement structure 5 supported on the mandrel 3 is fed to the extruder 6 for application of the cover 7. On leaving the extruder the covered assembly immediately enters the tube 9 and passes along the length of the tube to emerge in a substantially cured condition. Within the tube 9 the assembly passes through the heating fluid the specific gravity of which at the curing temperature is substantially equal to the specific gravity of the assembly so that the assembly is mainly supported by its buoyancy in the heating fluid and therefore maintains a straight configuration during vulcanisation within the tube 9.  On leaving the vulcaniser section 8 the assembly is passed through a cooling chamber (not shown) and collected on a reel (not shown) prior to removal of the mandrel.

The part formed hose assembly may be fed directly from the braider 4 to the extruder 6.  Alternatively several part formed hose assemblies may be collected and subsequently fed consecutively through the extruder 6 and vulcaniser 8 by connecting the ends of the mandrels of successive assemblies.

The abovedescribed method is illustrated more completely by the following specific example:

A part formed hose assembly consisting of a nitrile rubber liner of 9.5 mm I.D. and a reinforcement structure comprising two braided layers of wire filaments of brass plated high tensile steel laid at an angle of $54^{\circ}$ to the longitudinal axis supported on a long length flexible nylon mandrel was fed to an extruder for application of a polychloroprene rubber cover to produce a hose generally in accordance with SAE 100R2A.  The assembly of mandrel and uncured hose having a specific gravity of 1.99 leaving the extruder entered a vulcaniser through which a heating fluid consisting of a molten salt solution at a temperature in the range 150-200$^{\circ}$C and a pressure in the range 50 to 100 p.s.i. circulated to effect vulcanisation of the cover and liner.  The liner compound had a faster cure rate (approx 25% at room temperature and atmospheric pressure) than the cover compound.  The heating fluid had a specific gravity of 1.94 at the curing temperature.

The assembly leaving the vulcaniser was passed through a bath of cold water and collected on a take-off reel which applied a tension of 30 Kg to the length of

8. 0070644

assembly between the reel and the cover extruder outlet.

Hose produced by the abovedescribed method has a smooth outer surface and is substantially free from any non-rectilinear set. Furthermore misalignment of the braided reinforcement from the optimum configuration in which the individual filaments extend at an angle of $54^{\circ}$ to the longitudinal axis is minimised. As a result hose produced by the method according to the present invention has been found to have an improved fatigue life compared with an equivalent hose produced by the known method in which the hose is cured as a catenary.

0070644

CLAIMS:

1.     A method of continuous hose manufacture comprises continuously feeding to an extruder a long length part formed hose assembly comprising an inner liner and a reinforcement structure, extruding an outer cover of curable polymeric material around the reinforcement structure and continuously feeding the covered hose assembly through a curing tube in which the covered hose assembly is surrounded by and in contact with heating fluid at a temperature and pressure sufficient to effect curing and consolidation of the hose characterised in that the curing tube (8) is straight and extends generally horizontally and the heating fluid has a specific gravity at the curing temperature substantially equal to the specific gravity of the covered hose assembly (2,5,7).

2.     A method according to Claim 1 characterised in that the part formed hose assembly (2,5) is internally supported on a long length flexible mandrel (3) and the specific gravity of the heating fluid at the curing temperature is substantially equal to the specific gravity of the mandrel (3) and covered hose assembly (2,5,7).

3.     A method according to Claim 2 characterised in that the liner (2) comprises uncured polymeric material which is cured by passage through the heating fluid.

4.     A method according to Claim 3 characterised in that the liner compound has a faster cure rate than the cover compound.

5.     A method according to Claim 4 characterised in that the liner and cover cure rates are such that curing thereof occurs substantially simultaneously.

6.     A method according to any one of the preceding claims characterised in that the temperature and pressure of the heating fluid may be varied independently of one another.

7.     A method according to Claim 1 characterised in that the liner (3) is self-supporting.

8.     A method according to Claim 7 characterised in

**0070644**

that the liner (3) is cured prior to application of the
cover (7).

9.      Hose produced by the method according to any
one of the preceding claims.

10.      Hose according to Claim 9 characterised in that
the liner (2) and cover (7) materials comprise
vulcanisable elastomers for example polychloroprene,
nitrile, butyl rubbers or combinations thereof.

11.      Hose according to Claim 9 characterised in that
the liner (2) material comprises a polyester, polyamide
or polycarbonate and the cover (7) material comprises a
vulcanisable elastomer for example polychloroprene,
nitrile, butyl rubbers or combinations thereof.

European Patent
Office

**EUROPEAN SEARCH REPORT**

0070644

Application number

EP 82303529.0

## DOCUMENTS CONSIDERED TO BE RELEVANT

| Category | Citation of document with indication, where appropriate, of relevant passages | Relevant to claim |
|---|---|---|
| A | <u>DE - A1 - 2 532 864</u> (TROESTER)<br>* Totality *<br>-- | 1,3,5,10 |
| A | <u>DE - B2 - 2 311 305</u> (WINSTER HOSE)<br>* Totality *<br>-- | 1,2,10,11 |
| A | <u>AT - B - 236 102</u> (SEMPERIT)<br>* Totality *<br>-- | 7,8,10 |
| A | <u>DD - A - 68 379</u> (BÖHMER)<br>* Totality *<br>-- | 2 |
| A | <u>DE - B - 1 196 851</u> (TECALEMIT)<br>* Fig. 1; page 1, column 1, lines 7-19 *<br>-- | 11 |
| A | <u>DE - B - 1 182 419</u> (CONTINENTAL)<br>* Fig.; page 2, column 3, lines 35-38; column 4, lines 1-5 *<br>-- | 11 |
| A | <u>US - A - 4 178 968</u> (ANGIOLETTI)<br>* Totality *<br>-- | |
| D,A | <u>GB - A - 1 342 243</u> (WINSTER HOSE)<br>* Totality *<br>---- | |

**CLASSIFICATION OF THE APPLICATION (Int. Cl. 3)**

B 29 H 7/14

**TECHNICAL FIELDS SEARCHED (Int.Cl. 3)**

B 29 H 5/00
B 29 H 7/00
F 16 L 11/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims |
|---|---|

| Place of search | Date of completion of the search | Examiner |
|---|---|---|
| VIENNA | 05-10-1982 | MAYER |

EPO Form 1503.1 06.78